# EUROPEAN PATENT APPLICATION

(11) **EP 4 806 261 A1**
(43) Date of publication of application: **16.09.2026**
(21) Application number: 26164663.2
(22) Date of filing: 13.03.2026
(51) Int. Cl.: A01J 25/11, A01J 25/13, A01J 25/15, A01J 25/16

(54) **APPARATUS AND METHOD FOR DRAINING AND MOLDING CHEESE**

(30) Priority: 14.03.2025 IT 202500005312
(71) Applicant: Industria Casearia Silvio Belladelli S.p.A., 37069 Villafranca di Verona (VR) (IT)
(72) Inventor: Franchini, Pio Luigi, 37069 Villafranca di Verona (IT); Bertolani, Vittorio, Villafranca di Verona (IT); Auricchio, Errico, Villafranca di Verona (IT)
(74) Representative: Fisauli, Beatrice A. M.

(57) **Abstract**

Apparatus (10) and method for the draining and molding of cheese, the apparatus being intended to receive a form F of cheese mass, said apparatus (10) comprising:
- a hollow cylindrical element (12);
- a first disc (14), intended to be arranged inside the cylindrical element (12), at a first end thereof;
- a second disc (16), also intended to be arranged inside the cylindrical
element (12), at a second end opposite the first end;
wherein the cylindrical element (12) is intended to contain inside it the form F of cheese mass, wrapped in a cloth T, supported below by the first disc (14) and blocked above by the second disc (16);
said apparatus resulting in a single block which can be handled, in particular overturned, by means of turning devices;
so that the form F always remains inside the cylindrical element (12), protected by the first disc (14) and by the second disc (16), which, depending on the position of the entire apparatus (10), will act as lower support or as cap.

## Description

The present invention relates to an apparatus and to a method for the draining and molding of cheese.

More particularly, it relates to an apparatus and to a method for the draining and molding of cheese, in order to facilitate the operations of handling the cheese wheel by the operator.

As is known, the procedure for making cheese includes various steps.

First, the milk is prepared, the milk being selected and heated to a specific temperature, usually between 30°C and 40°C. Depending on the type of cheese desired, raw or pasteurized milk may be used.

The subsequent cheesemaking step provides for the addition of starter whey and rennet, an enzyme that causes the milk to coagulate. It is left to act until the milk is transformed into a solid gelatinous mass, called curd.

After a certain waiting time, approximately between 9 and 12 minutes, the curd is cut with suitable tools, for example a lyre, a curd breaker or knives, in order to promote the elimination of the whey.

The cooking step is then carried out, keeping the curd mixed until a temperature of about 53-55°C is reached, and then allowing it to settle in the double bottom, under whey, with a resting time of about 50-60 minutes. In this step, the aqueous part exerts pressure on the cheese mass, compacting it.

Once the resting step is completed, extraction begins of the cheese mass already cut into two twin forms which, still immersed in the whey, are arranged in respective cloths and thus constitute two semi-finished products called "bundles".

The draining and molding step is then carried out.

In this step, the curd gradually releases the whey, allowing the excess liquid to flow out. The cheese mass is shaped into the desired forms and subjected to pressing in order to eliminate further whey. During this step, numerous turnings and mold changes, also called hoops, take place for about two days, before brining in brine.

Subsequently, the maturation step takes place, in which the cheese is transferred to environments with controlled temperature and humidity. During maturation, it develops characteristic flavors, aromas and texture thanks to the action of bacteria and enzymes. The cheese is then aged for a period that varies depending on the result to be obtained: from a few days for fresh cheeses, to months or years for aged cheeses.

Finally, there is the packaging step, in which the cheese is packaged and made ready for consumption or further refined.

Going into the details, in particular, of the draining and molding step, the cheese mass is divided into two twin forms, arranged in respective cloths, thus constituting two semi-finished products called "bundles".

Each bundle is hooked to an automatic conveyor which carries it to a holding area, where it drips for about 15-30 minutes. In this way, the whey is made to come out of the curd mass.

The drained bundle is made to slide as far as a tray containing lukewarm drinking water, in order to allow turning so that the cut lies on the upper part in the mold. In this way, the first turning of the form is carried out.

Subsequently, the forms, extracted from the bundles, are placed in plastic hoops wrapped in cloths and covered by a disc called a board, which weighs between four and eight kg, on average six kg, in order to exert a slight pressure, in an environment at controlled temperature, about 20°C - 25°C.

The hoops consist of a plastic band 24 centimeters high, surrounded by a rope with a hook allowing adjustment of the diameter.

The forms in the hoop rest on slightly inclined and suitably shaped tables, called draining tables.

The second turning is carried out after a time between two hours and thirty minutes and three hours from the first placement in the hoop, changing the cloth.

The third turning takes place three hours and thirty minutes after the second, again changing the cloth.

At the fourth turning, six hours after the third, the cloth is removed, leaving the paste bare in the hoop with a marking band. A cloth may be placed on top, possibly thicker so as not to disperse too much heat, and the board is arranged above the cloth.

Molding in the plastic hoop lasts about 18 hours, at the end of which the paste must appear perfectly bound, elastic, straw-colored, without whitish spots and, upon percussion, must respond with a full sound. Of this time span comprised between 18 and 20 hours, however, it is the first four, five hours in which the drainage of the whey occurs and is completed.

Subsequent to these first 18-20 hours, the form remains at rest with turnings carried out by automatic devices.

In the draining and molding step, however, the first turnings are carried out by one or more operators, who must perform the following operations at least a couple of times:
- open and remove the hoop;
- change the cloth of the form, arranging it in a new, clean, slightly damp cloth;
- arrange the form covered by the new cloth inside the hoop in an overturned position with respect to the previous position;
- arrange the board on the hoop above the form covered by the cloth.

These are rather heavy and tiring operations for the operator, operations which are moreover also time-consuming.

In an attempt to automate these operations, apparatuses have been introduced.

Patent document IT10200900829857 describes equipment for molding freshly made cheese, comprising a hollow cylindrical body internally lined with a removable permeable jacket, two transverse discoid plates freely slidable between which the cheese mass is intended to be placed, as well as a cradle rotatable about a horizontal transverse axis with controlled motion, suitable for performing successive rotations between two positions with vertical axis; such equipment may furthermore comprise opposite removable end walls and further members for securing the permeable jacket to the cylindrical body.

A solution of this type, although suitable for molding the product, is based on a relatively articulated structure, comprising dedicated support, rotation and closure members, and therefore requires a more complex constructional assembly, with the presence of several components cooperating with one another, such as cradle, rotation axis, end walls and removable permeable jacket. Furthermore, the presence of jacket lining and fastening elements entails a rather complex operational management of the equipment.

Patent document US3158089A also discloses a device for pressing cheese, in particular Gruyère-type cheeses, in which the product is arranged in a mold composed of a lower bottom, a lateral annular element and an upper bottom, pneumatic cushions being furthermore provided interposed between the bottoms and the cheese, accessible valves for inflating and deflating the cushions, possible rigid pressure-distribution plates and fastening means.

Such solution is specifically directed to adjustable pneumatic pressing on the opposite faces of the cheese and requires, for its operation, the presence of dedicated pneumatic and closure components, with consequent greater constructional and plant complexity. In particular, the need for pneumatic cushions, valves, inflation means and fastening members makes the assembly rather complex from the structural and operational points of view.

The purpose of the present invention is to provide an apparatus and a method for the draining and molding of cheese which overcome the problems of the known art.

Another purpose of the invention is to provide an apparatus and a method for the draining and molding of cheese which are convenient for the operator.

Another purpose of the invention is to provide an apparatus and a method for the draining and molding of cheese which maintain the desired temperature uniform throughout the entire thickness of the cheese form during molding.

Another purpose of the invention is to provide an apparatus and a method for the draining and molding of cheese which make it possible to save time with respect to what occurs with the known art.

These and other purposes are achieved by an apparatus and a method for the draining and molding of cheese according to the appended claims.

Further features and details of the invention may be better understood from the following description, given by way of non-limiting example, as well as from the attached drawing tables, in which:
fig. 1 is an axonometric view of an apparatus for the draining and molding of cheese, according to the invention;
fig. 2 is a side sectional view of the apparatus of figure 1.

With reference to the attached figures, 10 identifies an apparatus, according to the invention, for the draining and molding of cheese.

The apparatus 10 comprises:
- a hollow cylindrical element 12, made of plastic material;
- a first disc 14, intended to be arranged inside the cylindrical element 12, at a first end thereof;
- a second disc 16, also intended to be arranged inside the cylindrical element 12, at a second end, opposite the first.

The cylindrical element 12 has a height between 40 cm and 55 cm, as well as an outer diameter between 38 cm and 48 cm.

The first disc 14 and the second disc 16 have the same conformation; they have a height approximately between 4 cm and 6 cm, as well as a diameter slightly smaller than the inner diameter of the cylindrical element 12.

As can be seen in figure 3, the cylindrical element 12 is intended to contain inside it a form F of cheese mass, wrapped in a cloth T, supported below by the first disc 14 and blocked above by the second disc 16.

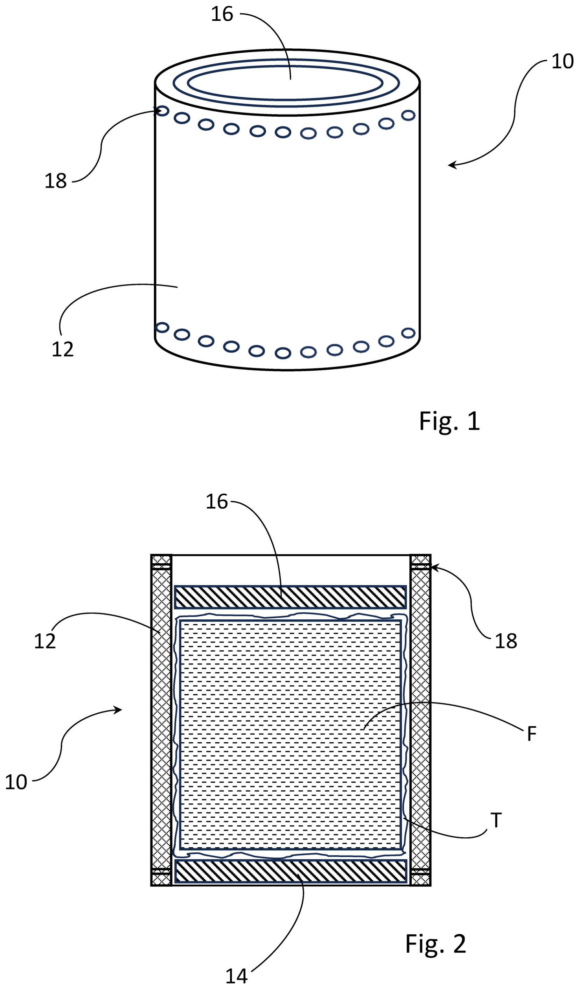

As illustrated in figures 1 and 2, in the cylindrical element 12, precisely in the upper outer edge and in the lower outer edge, through holes 18 are made, thus arranged in correspondence with the first disc 14 and the second disc 16.

The apparatus 10 allows the whey draining from the form F to flow out through the holes 18, the space comprised between the outer edge of the discs 14, 16 and the microholes present in the cylindrical element 12.

The method for draining and molding cheese by means of the apparatus 10 as described above is illustrated below.

The curd drains for a period between 15 and 30 minutes hanging by its bundle and is then lowered directly into the apparatus 10.

In particular, the apparatus 10 is first assembled with the cylindrical element 12 and the first disc 14 acting as lower support.

The form F of cheese mass inside the cloth T is inserted into the cylindrical element 12 above the first disc 14.

The excess cloth T is folded correctly, and the second disc 16 acting as a cap is then arranged above, as illustrated in figure 2.

The apparatus 10 thus configured, with the form F covered by the cloth T inside it, constitutes a single block which can be handled, in particular overturned, by means of the automatic turning devices usually used for the turnings carried out in the final part of the molding step.

In other words, the apparatus 10 makes it possible to carry out turnings automatically, since the curd, i.e. the form F, always remains inside the cylindrical element 12, protected by the first disc 14 and the second disc 16, which, depending on the position of the entire apparatus 10, will act as lower support or as cap.

The cloth T does not come out of the apparatus 10 and does not come into contact with any mechanical parts of the devices which carry out the automatic turning.

The draining and molding method, once the form F has been inserted into the apparatus 10 as previously described, provides that the apparatus 10 remains in position for a period between 2 and 4 hours.

At the end of this period of time, automatic turning takes place.

Subsequently, after a further period of time of approximately between 2 and 4 hours, a further automatic turning takes place.

The apparatus 10 with its form F inside it remains in such position for 6 hours, at the end of which the form F is inserted into the traditional hoop together with the marking band.

The molding method then proceeds according to the known art.

In this way, during the first 12 hours of the draining and molding step it is possible to avoid manual turnings, maintaining the cloth, which helps the whey draining from the curd to flow out by capillarity.

Furthermore, the form F is kept warmer because it never comes into contact with the external environment. In fact, it is possible to avoid the changes of cloth T which would occur with manual turnings.

It is therefore possible to maintain the same peculiarities of the form F with respect to the known art, if not improve them, because constancy in the dimensions is achieved, with a more homogeneous and slower cooling of the paste, necessary for the successful production of the cheese.

After these 12 hours, the curd is stripped of this band and is placed in a traditional plastic hoop, with the marking band and its board, and it is likewise placed in the automatic warehouse.

After 6 hours it is taken again, the plastic hoop is replaced with the traditional steel hoop for a period between 12 and 48 hours, always in the automatic warehouse where it will undergo its turnings before being ready for salting.

The apparatus 10 and the method described above have numerous advantages.

First of all, protection of the form is achieved: the curd is not exposed to the air, the rind is more uniform and porous and therefore drains the whey better. It also remains warmer because it cools in a homogeneous manner and much more slowly and therefore has better acidification.

Important aesthetic improvements are obtained. In fact, according to the known art, during the various manual turnings, cuts, cracks and folds may be produced which the operator unintentionally causes in the form which, at this step, is very soft.

An important reduction in load handling is obtained: in fact, it is avoided that the operator must change the cloths and turn the forms several times during the day, as provided by the known art.

With the apparatus 10 according to the invention, we have the possibility of implementing an automatic system so that the operator no longer has to exert significant physical effort repeatedly (the form weighs about 40-42 kg), but will only have to change the hoops.

Variants and embodiments different from what has previously been illustrated are possible, to be considered included within the scope of protection defined by the appended claims.

For example, the holes on the upper and lower edges of the cylindrical element may also be absent, or may be present and have shapes different from the classic circular hole.

Furthermore, at the ends of the cylindrical element 12, inside it, there may be provided locking means, possibly removable, intended to prevent the first disc 14 and the second disc 16 from coming out of the cylindrical element 12 itself.

The cylindrical element 12 may also have an adjustable diameter, so as to accommodate forms F of different size.

Furthermore, the height and diameter measurements of the cylindrical element may be different from what is defined in the description above, and vary according to the size and type of cheese to be obtained.

In the cylindrical element, holes arranged in a position different from the ends may be formed.

Furthermore, in the cylindrical element, as an alternative or in combination with the one or more through holes, one or more grooves may be formed, formed longitudinally in the inner surface of the cylindrical element itself, so as to allow the whey to flow from the central part of the cylindrical element toward the ends.

Such grooves may vary in depth and may also possibly be through near the ends of the cylindrical element.

Moreover, one or more through holes may be made in the first disc and/or in the second disc to assist the outflow of excess whey.

Furthermore, the cylindrical element and/or the first disc and/or the second disc may be made of porous material, intended to allow the passage and outflow of whey.

The cylindrical element may also have a shape different from the cylindrical one, depending on production requirements; it may have a square or rectangular cross-section.

## Claims

1. Apparatus (10) for the draining and molding of cheese, intended to receive a form F of cheese mass, said apparatus (10) being **characterized in that** it comprises:
- a hollow cylindrical element (12);
- a first disc (14), intended to be arranged inside the cylindrical element (12), at a first end thereof;
- a second disc (16), also intended to be arranged inside the cylindrical element (12), at a second end opposite the first end;
wherein the cylindrical element (12) is intended to contain inside it the form F of cheese mass, wrapped in a cloth T, supported below by the first disc (14) and blocked above by the second disc (16);
said apparatus resulting in a single block which can be handled, in particular overturned, by means of turning devices;
so that the form F always remains inside the cylindrical element (12), protected by the first disc (14) and by the second disc (16), which, depending on the position of the entire apparatus (10), will act as lower support or as cap.

2. Apparatus (10) according to the preceding claim, wherein at least one through hole (18) is formed in the cylindrical element (12).

3. Apparatus (10) according to the preceding claim, wherein said at least one through hole (18) is formed in the upper outer edge and/or in the lower outer edge of the cylindrical element (12).

4. Apparatus (10) according to claim 2 or 3, wherein through holes (18) arranged circumferentially in the cylindrical element (12) are provided.

5. Apparatus according to the preceding claim, wherein at least one groove is formed internally in the cylindrical element.

6. Apparatus (10) according to one of the preceding claims, wherein at the ends of the cylindrical element (12), inside it, locking means are provided, intended to prevent the first disc (14) and/or the second disc (16) from coming out of the cylindrical element (12).

7. Apparatus (10) according to the preceding claim, wherein the locking means are removable.

8. Apparatus (10) according to one of the preceding claims, wherein the cylindrical element (12) has an adjustable diameter.

9. Method for the draining and molding of cheese, **characterized in that** it comprises the following steps:
- wrapping a form F of cheese mass in a cloth T;
- arranging the form F wrapped in the cloth T inside the apparatus (10) according to the preceding claims;
- turning the apparatus (10) containing the form F of cheese mass by means of automatic devices at regular and predetermined intervals.

10. Method according to the preceding claim, wherein the form F remains in a static position for a period between 2 and 4 hours before being turned by means of automatic devices.

11. Method according to claim 9, wherein the curd drains for a period between 15 and 30 minutes hanging by its bundle and is then lowered directly into the apparatus (10).

12. Method according to claim 11, wherein the apparatus (10) is first assembled with the cylindrical element (12) and the first disc (14) acting as lower support, the form F of cheese mass inside the cloth T is inserted into the cylindrical element (12) above the first disc (14), the excess cloth T is folded correctly, and the second disc (16) acting as a cap is then arranged above.

13. Method according to claim 12, wherein the apparatus (10) thus configured, with the form F covered by the cloth T inside it, constitutes a single block which can be handled, in particular overturned, by means of the automatic turning devices usually used for the turnings carried out in the final part of the molding step.

14. Method according to claim 13, wherein the form F always remains inside the cylindrical element (12), protected by the first disc (14) and by the second disc (16), which, depending on the position of the entire apparatus (10), will act as lower support or as cap, and wherein the cloth T does not come out of the apparatus (10) and does not come into contact with any mechanical parts of the devices which carry out the automatic turning.

15. Method according to claim 14, wherein the apparatus (10) remains in position for a period between 2 and 4 hours, at the end of which automatic turning takes place, subsequently, after a further period of time of approximately between 2 and 4 hours, a further automatic turning takes place, and the apparatus (10) with its form F inside it remains in such position for 6 hours, at the end of which the form F is inserted into the traditional hoop together with the marking band.
